(19)

Europäisches
Patentamt
European
Patent Office
Office européen
des brevets

(11) **EP 2 456 204 A1**

(12) **EUROPEAN PATENT APPLICATION**

(43) Date of publication:
**23.05.2012 Bulletin 2012/21**

(51) Int Cl.:
***H04N 7/26*** *(2006.01)*

(21) Application number: **10191645.0**

(22) Date of filing: **18.11.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Koninklijke Philips Electronics N.V.
5621 BA Eindhoven (NL)**

(72) Inventors:
 • **Bruls, Wilhelmus, H.A.**
   **5600 AE Eindhoven (NL)**
 • **Schmeitz, Harold, A.W.**
   **5600 AE Eindhoven (NL)**

(74) Representative: **Damen, Daniel Martijn
   Philips
   Intellectual Property & Standards
   P.O. Box 220
   5600 AE Eindhoven (NL)**

(54) **Method and apparatus for encoding or generating an image**

(57)    An image encoder comprises a processor (201, 203) which generates a set of samples for the image where the samples comprise a set of luma samples and at least a first set of chroma samples which is subsampled relative to the luma samples. An encoding unit (205) encodes the image samples to provide an output signal. A decoder comprises a receiver (1301) which receives the data from the encoder. A processor (1303) upscales chroma samples to a full resolution image. The luma samples of the image data has a luma sample pattern corresponding to a regular grid of sample positions. The first set of chroma samples has a chroma sample pattern with varying subsampling ratio and/or a varying subsampling phase. The varying chroma sampling may provide an improved image quality. The invention may modify sampling positions of YUV422 or YUV420 schemes to provide improved image quality while maintaining backwards compatibility and low complexity.

FIG. 2

EP 2 456 204 A1

**Description**

FIELD OF THE INVENTION

The invention relates to a method and apparatus for encoding or generating an image.

BACKGROUND OF THE INVENTION

Digital encoding of images have become a fundamental and ubiquitous part of many applications and user scenarios including encoding of video signals, television signals, image capturing, photography etc.

Such digital encoding typically includes a spatial sampling of the image followed by an encoding of the resulting digital samples. Many different encoding formats have been developed and standardized including for example JPEG, MPEG, H264 etc.

In its simplest form, the spatial sampling is typically a uniform spatial sampling of the entire image with equidistant sample points in both horizontal and vertical directions. For a color image a plurality of sample values may be obtained to represent the color information.

Various color schemes and standards are used for representing colors including e.g. primary color representations such as the well-known Red, Green, Blue (RGB) color scheme. Furthermore, color representations have been developed which separate the representation into one component reflecting luma values and one or more components reflecting chroma values independently of the luma. One such scheme is the YUV scheme which represents the color image by one luma component (Y) and two chroma components (U,V). When performing full sampling of both luma and chroma components, this scheme is known as a YUV444 scheme.

It has been found that the human perception is much less sensitive to frequency variations (fine detail) in chroma than in luma. This has been used to reduce the amount of image data that must be encoded by subsampling the chroma values relative to the luma values.

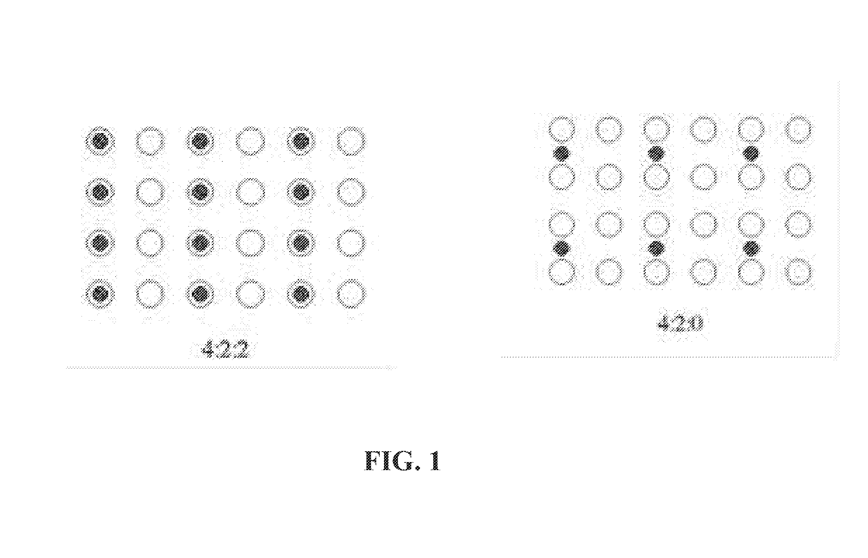

An example of such a representation is the YUV4:2:2 (to provide a more compact notation the semi-colons are ignored henceforth when denoting color scheme representations) representation wherein the chroma values are down-sampled by a factor of two in the horizontal direction thereby halving the number of chroma samples for each component relative to the number of luma samples. Another example is the YUV420 representation wherein the chroma values are down-sampled by a factor of two in both the horizontal and vertical direction thereby reducing the number of chroma samples for each component by a factor of four relative to the number of luma samples. FIG. 1 shows the sampling positions for YUV422 and YUV420.

However, the user of YUV422 and YUV420 and similar schemes tend to have some associated disadvantages in terms of features such as image quality. Furthermore, YUV444 tends to be expensive to use.

Video compression typically uses YUV420 sampling. Thus, typically for video compression both color (chroma) components U &V are in the horizontal and vertical direction spatially subsampled with a factor of 2. For most captured images the difference is relatively small in comparison to full sampling of the chroma components, i.e. there is typically relatively little difference to YUV444 which does not have any chroma subsampling at all. However synthetic and artificially created content is becoming increasingly widespread and is for example increasingly used in movie making (indeed some movies are completely synthetic). For such content, the degradation caused by chroma subsampling may in particular become significant.

However, using YUV444 tends to be impractical and have associated disadvantages. Indeed, not only does it tend to increase the data rate as more samples must be encoded but it also increases the complexity and resource of the required processing.

Currently, YUV422 is used in professional equipment and therefore suitable hardware (and in particular dedicated integrated circuits) is available for YUV422 decoders and encoders. However, dedicated hardware for YUV444 is very rare, costly, and significantly more complex. Therefore, a more efficient sampling scheme would be advantageous.

Hence, an improved approach would be advantageous and in particular an approach allowing increased flexibility, increased quality, reduced complexity, increased hardware compatibility, increased backwards compatibility, reduced resource usage, reduced data rate and/or improved performance would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided method of encoding an image comprising: representing the image by image data samples comprising a set of luma samples and at least a first set of chroma samples being subsampled relative to the luma samples, the luma samples having a luma sample pattern corresponding to a regular grid of sample positions and the first set of chroma samples having a chroma sample pattern with at least one of a varying subsampling ratio and a varying subsample phase; and encoding the image data samples.

The invention may allow improved encoding of an image and may in particular in many embodiments allow improved quality of the encoded image. In many scenarios improved quality may be achieved while maintaining a low complexity of the encoding process. The approach may in many scenarios provide improved backwards compatibility, and may allow reuse of existing functionality and in particular of existing dedicated hardware such as dedicated integrated circuits. In particular, in many scenarios, improved quality may be achieved while allowing hardware and functionality for encoding of YUV422 (and/or YUV420) to be used.

The variation of the subsampling ratio and/or the subsampling phase is a spatial variation that may e.g. allow an adaptation to local image characteristics or may allow a more efficient distribution of sample points across the image. In some embodiments, the sample density of the chroma samples may vary across the image. Different image areas may have different sample densities.

In some embodiments, the chroma sample pattern may be a constant density throughout the image but have a varying subsampling phase. The varying subsampling phase may specifically reflect the chroma sample pattern having a varying offset relative to a subsampled grid corresponding to the regular grid subsampled corresponding to the subsampling of the chroma samples. The individual sample positions can have different offsets relative to the subsampled grid of the luma sample pattern. The subsampled grid may comprise a subset of lines of the regular grid. The ratio between the number of lines in the subsampled grid and the number of lines in the regular grid (of the luma samples) is equal to the subsampling ratio of the set of chroma samples relative to the luma samples. The subsampled grid may have lines removed in accordance with the subsampling of the chroma samples relative to the luma samples. For example, if the chroma samples are subsampled by a factor of N in the horizontal direction, the subsampled grid may have vertical lines removed in the same ratio, i.e. only every Nth vertical line may be maintained. Similarly, if the chroma samples are subsampled by a factor of N in the vertical direction, the subsampled grid may have horizontal lines removed in the same ratio, i.e. only every Nth horizontal line may be maintained. Thus, the subsampled grid may have a horizontal line density relative to the horizontal line density of the regular grid of the luma sample pattern which corresponds to the horizontal subsampling ratio between the set of chroma samples and the set of luma samples. Similarly, the subsampled grid may have a vertical line density relative to the vertical line density of the regular grid of the luma sample pattern which corresponds to the vertical subsampling ratio between the set of chroma samples and the set of luma samples.

The chroma sample pattern may comprise lines aligned with the regular grid. The lines of the subsampled grid may be coincident or parallel to the gridlines of the regular grid of the luma sample pattern. However, in such an example at least one line of chroma sample positions may have at least one sample position offset differently relative to the subsampled grid than at least one sample position of at least one other line.

A varying subsampling phase/offset may in many scenarios allow improved anti-alias filtering and may in particular allow a more isotropic or uniform filtering e.g. when upscaling chroma samples in a decoder.

The approach may in particular allow improved image quality in many scenarios while maintaining low complexity and/or encoded data rate.

The encoding may be arranged to include an indication of the chroma sampling pattern in an encoded output data stream.

The image may specifically be a digital picture or may be an image of a sequence of images such as an image of a video sequence. The image may be a progressive frame of a video signal and/or may be a field of an interlaced frame.

In accordance with an optional feature of the invention, the chroma sample pattern comprises a series of lines of sample positions with at least two adjacent lines having sample positions spatially offset relative to each other in a direction of the lines.

This may allow improved image quality in many scenarios while allowing facilitated and/or reduced complexity sample generation. For example, the subsampled chroma samples may be generated from a full set of chroma samples at the luma sample positions.

The lines may be aligned with a gridline of the regular grid and may specifically be a horizontal or vertical line of the image. Each line may specifically be a row or column of the luma sample pattern or may e.g. be parallel thereto.

In accordance with an optional feature of the invention, the chroma sample pattern is a quincunx sample pattern.

This may provide a particularly advantageous encoding and may in many scenarios allow improved quality and/or reduced complexity.

In accordance with an optional feature of the invention, a subsampling ratio between the set of luma samples and the first set of chroma samples has an integer value.

This may reduce complexity and/or may in many scenarios allow improved backwards compatibility. For example, the approach may allow sample sets with the same properties/ dimensions as conventional representations to be generated thereby allowing reuse of functionality for such conventional representations.

In many embodiments the subsampling ratio (the decimation factor) may specifically have a value of two. This may in some scenarios provide a representation with the same dimensions as for YUV422 thereby allowing functionality developed for YUV422 to be reused (while providing improved quality relative to YUV422).

In many embodiments the subsampling ratio (the decimation factor) may specifically have a value of four. This may in some scenarios provide a representation with the same dimensions as for YUV420 thereby allowing functionality developed for YUV420 to be reused (while providing improved quality relative to YUV420).

In accordance with an optional feature of the invention, the subsampling ratio varies between different areas of the image.

This may provide improved quality, and may in particular allow sampling to be adapted to local image characteristics. Thus, in some embodiments a sampling ratio in a first area of the image may be different than a sampling ratio in a second area of the image.

The approach may for example allow an improved adaptation of sampling positions such as e.g. a denser chroma sampling of areas with higher frequency variations than for areas with lower frequency variations.

A spatially adaptive anti-aliasing filter may be used which has different cut-off frequencies in the different areas. Thus, the anti-alias filter may be adapted to reflect the local sampling ratio.

The subsampling ratio variation may be subject to a total number of chroma samples in the first set of chroma samples being a predetermined number. Specifically, the total number of chroma samples for each chroma component of the image may have a predetermined ratio relative to the number of luma samples. E.g. the number of chroma samples for each chroma component may be one half or one quarter of the number of luma samples.

In accordance with an optional feature of the invention, the method further comprises determining sample positions for the chroma sample pattern in response to the set of luma samples.

This may provide a particularly advantageous adaptation of the chroma sampling.

In accordance with an optional feature of the invention, determining sample positions comprises determining a distance between adjacent sample positions of the chroma sample pattern in response to at least one of a local luma variation measure and a local chroma variation measure.

This may provide a particularly advantageous adaptation of the chroma sampling.

In accordance with an optional feature of the invention, the encoding comprises applying an encoding algorithm for a chroma sample pattern having a non-varying subsample phase.

This may allow a particularly cost efficient implementation in many embodiments. Specifically, it may allow reuse of existing functionality. Indeed, an advantage of the invention is that it may in many scenarios allow functionality developed for conventional regular grid sampled chroma patterns to be reused while allowing improved quality to be achieved.

The non-varying subsample phase may specifically result in a non-varying spatial offset relative to the subsampled grid of the regular luma grid.

The chroma sample pattern having a non-varying subsample phase may specifically correspond to a sample pattern for one of a YUV422 and a YUV420 sample pattern. This may allow a particularly efficient and low cost implementation.

In accordance with an optional feature of the invention, the image data samples further comprise a second set of chroma samples having a further chroma sample pattern, the further chroma sample pattern being subsampled relative to the chroma sample pattern; and wherein the step of encoding the image data samples comprises generating a scalable output bit stream having encoding data for the luma samples and the second set of chroma samples in a base layer and encoding data for the first set of chroma samples in an enhancement layer.

This may allow a particularly advantageous implementation and may specifically facilitate introduction of the approach and provide improved backwards compatibility.

In accordance with an optional feature of the invention, encoding the image data samples further comprises: generating a prediction for the first set of chroma samples from the second set of chroma samples; and generating the encoding data for the first set of chroma samples in response to the prediction.

This may allow an improved encoding and may in many scenarios reduce an image quality to data rate ratio for the encoding of the image.

In accordance with an aspect of the invention, there is method of generating an image, the method comprising: receiving image data samples for the image, the image data samples comprising a set of luma samples and at least a first set of chroma samples being subsampled relative to the luma samples, the luma samples having a luma sample pattern corresponding to a regular grid of sample positions, and the first set of chroma samples having a chroma sample pattern with at least one of a varying subsampling ratio and a varying subsample phase; generating a further set of chroma samples comprising chroma samples at sample positions of the luma samples in response to the first set of chroma samples; and generating the image from the set of luma samples and the further set of chroma samples.

The invention may allow an improved image quality to be achieved for an image generated from luma and chroma samples. In many scenarios, improved quality may be achieved while maintaining a low complexity of the process of generating the image. The approach may in many scenarios provide improved backwards compatibility and may allow reuse of existing functionality and indeed of existing dedicated hardware such as dedicated integrated circuits. In particular, in many scenarios, improved quality may be achieved while allowing hardware and functionality for processing of YUV422 (YUV420) samples to be used.

The variation of the subsampling ratio and/or the subsampling phase is a spatial variation that may e.g. allow an adaptation to local image characteristics or may allow a more efficient distribution of sample points across the image. In some embodiments, the sample density of the chroma samples may vary across the image. Different image areas may have different sample densities.

In some embodiments, the chroma sample pattern may be a constant pattern throughout the image but have a varying subsampling phase. The varying subsampling phase may specifically reflect the chroma sample pattern having a varying offset relative to a subsampled grid corresponding to the regular grid subsampled corresponding to the subsampling of the chroma samples. The individual sample positions that can have different offsets relative to the subsampled grid of the luma sample pattern. The subsampled grid may comprise a subset of lines of the regular grid. The ratio between the number of lines in the subsampled grid and the number of lines in the regular grid (of the luma samples) is equal to the subsampling ratio of the set of chroma samples relative to the luma samples. The subsampled grid may have lines removed in accordance with the subsampling of the chroma samples relative to the luma samples. For example, if the chroma samples are subsampled by a factor of N in the horizontal direction, the subsampled grid may have vertical lines removed in the same ratio, i.e. only every Nth vertical line may be maintained. Similarly, if the chroma samples are subsampled by a factor of N in the vertical direction, the subsampled grid may have horizontal lines removed in the same ratio, i.e. only every Nth horizontal line may be maintained. Thus, the subsampled grid may have a horizontal line density relative to the horizontal line density of the regular grid of the luma sample pattern which corresponds to the horizontal subsampling ratio between the set of chroma samples and the set of luma samples. Similarly, the subsampled grid may have a vertical line density relative to the vertical line density of the regular grid of the luma sample pattern which corresponds to the vertical subsampling ratio between the set of chroma samples and the set of luma samples.

The chroma sample pattern may comprise lines aligned with the regular grid. The lines of the subsampled grid may be coincident or parallel to the gridlines of the regular grid of the luma sample pattern. However, in such an example at least one line of chroma sample positions may have at least one sample position offset differently relative to the subsampled grid than at least one sample position of at least one other line.

A varying subsampling phase/offset may in many scenarios allow improved chroma upscale filtering and may in particular allow a more isotropic or uniform filtering.

The method may in particular allow improved quality when decoding of an image. Thus, the method may comprise receiving an encoded data stream and decoding this data stream to generate the set of luma samples and the at least first set of chroma samples.

In accordance with an optional feature of the invention, generating the further set of chroma samples comprises generating a chroma sample at a luma sample position in response to the first set of luma samples.

This may allow a particularly efficient generation and/or quality of the image.

In accordance with an optional feature of the invention, the image data samples further comprises a second set of chroma samples and generating the further set of chroma samples comprises generating a chroma sample at a luma sample position in response to the second set of chroma samples.

This may allow a particularly efficient generation and/or quality of the image.

According to an aspect of the invention there is provided an apparatus for encoding an image comprising: a processor for representing the image by image data samples comprising a set of luma samples and at least a first set of chroma samples being subsampled relative to the luma samples, the luma samples having a luma sample pattern corresponding to a regular grid of sample positions, and the first set of chroma samples having a chroma sample pattern with at least one of a varying subsampling ratio and a varying subsample phase; and an encoder for encoding the image data samples.

According to an aspect of the invention there is provided an apparatus for generating an image comprising: a receiver for receiving image data samples for the image, the image data samples comprising a set of luma samples and at least a first set of chroma samples being subsampled relative to the luma samples, the luma samples having a luma sample pattern corresponding to a regular grid of sample positions, and the first set of chroma samples having a chroma sample pattern with at least one of a varying subsampling ratio and a varying subsample phase; a processor for generating a further set of chroma samples comprising chroma samples at sample positions of the luma samples in response to the first set of chroma samples; and a processor for generating the image from the set of luma samples and the further set of chroma samples.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 is an illustration of a prior art sample schemes for chroma and luma samples for a colour image;

FIG. 2 illustrates an example of elements of an encoder for encoding an image in accordance with some embodiments of the invention;

FIG. 3 and 4 illustrates examples of image sample patterns;

FIG. 5 illustrates an example of a flow chart for a method of encoding an image in accordance with some embodiments of the invention;

FIG. 6-12 illustrates examples of image sample patterns;

FIG. 13 illustrates an example of elements of a decoder for decoding an image in accordance with some embodiments of the invention; and

FIG. 14 illustrates an example of a flow chart for a method of decoding an image in accordance with some embodiments of the invention.

DETAILED DESCRIPTION OF SOME EMBODIMENTS OF THE INVENTION

The following description focuses on embodiments of the invention applicable to a YUV color representation. However, it will be appreciated that the invention is not limited to this application but may be applied to many other examples using a luma component and one or more chroma components for representing a color image including for example YCrCb representations.

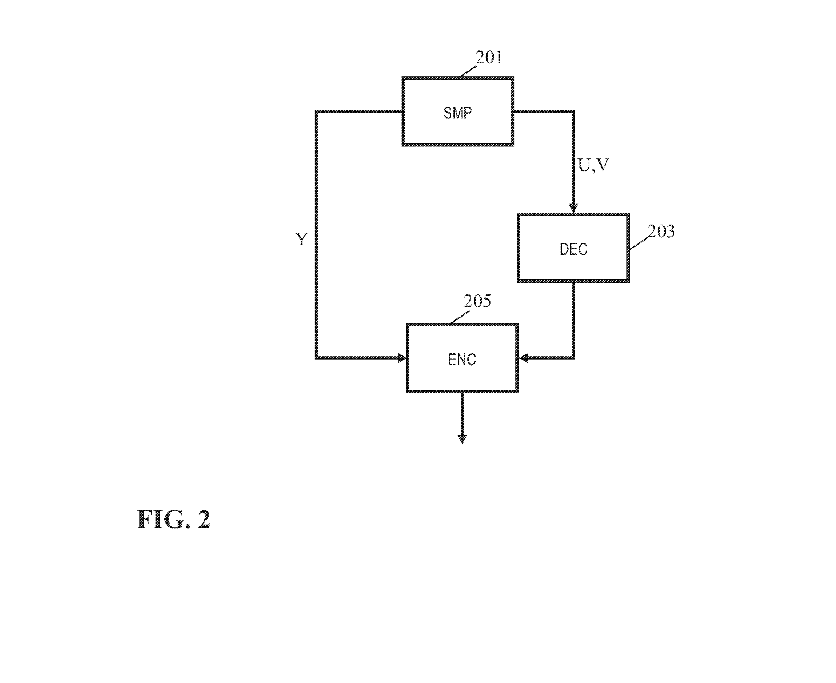

FIG. 2 illustrates an example of an encoder in accordance with some embodiments of the invention.

The encoder comprises an image sample processor 201 which is arranged to provide a sampled representation of a color image. The color image is represented by one luma component and one or more chroma components. In the specific example the image is represented in the YUV format i.e. with one luma component Y and two chroma components (U,V).

Furthermore, in the example the image sample processor 201 provides a sample pattern for the luma samples which corresponds to a regular grid covering the image. The regular grid is a two-dimensional grid corresponding to a tessellation of the image by congruent rectangles. The regular grid thus forms sample positions that are equidistant at least along each axis of the two dimensional grid. In the example, the regular grid is a Cartesian grid and the samples are equidistant in both axis directions, i.e. the tessellation is by a square.

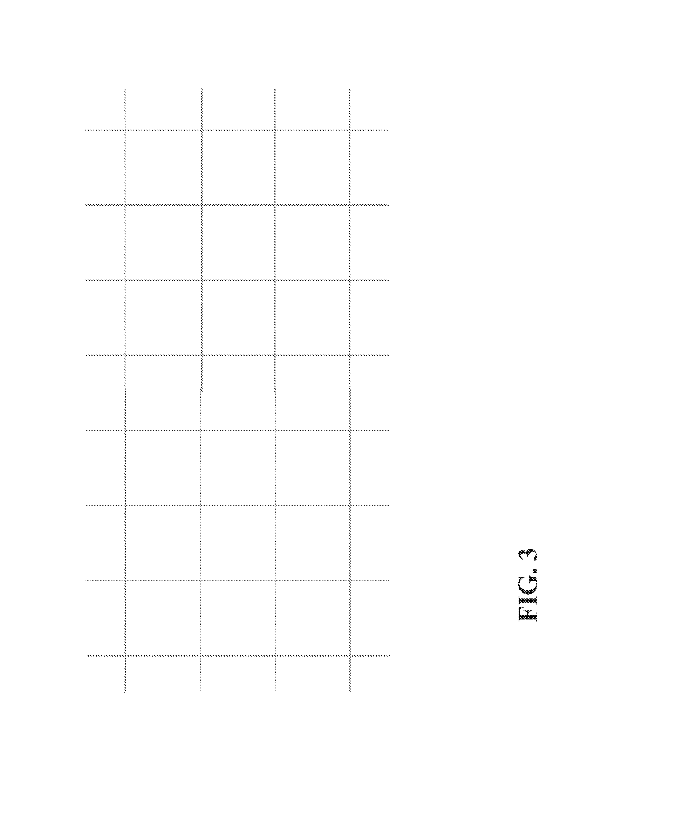

FIG. 3 illustrates a section of an example of the grid where all the luma samples are represented by the intersections between the grid lanes.

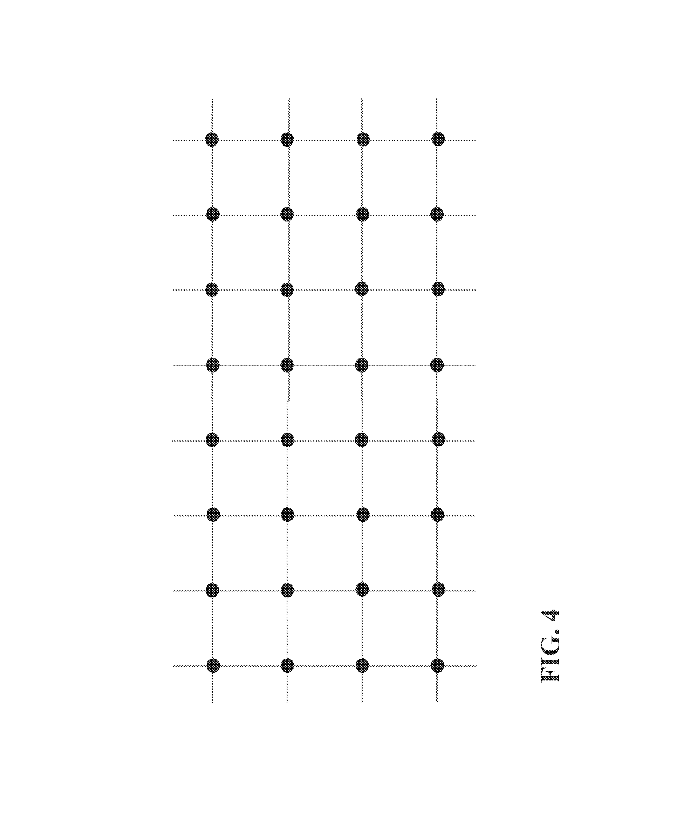

In the system of FIG.2, the image sample processor 201 provides a full set of samples for each sample point of the regular grid. Thus, for each intersection between the grid lines, the image sample processor 201 provides a luma sample and a chroma sample for each chroma component. Thus, as illustrated in FIG. 4, where black dots indicate chroma sample (positions), the image sample processor 201 in the example provides a full set of samples for each luma and chroma component, and in particular provides a Y sample, a U sample and a V sample for each sample position of the regular grid. The image sample processor 201 accordingly provides a sampled image in accordance with a YUV444 scheme.

It will be appreciated that the image sample processor 201 may itself be part of an image capturing system and may thus perform the sampling itself. In other embodiments, the image sample processor 201 may simply be a receiver for receiving e.g. a YUV444 sampled image from an external or internal source.

The image sample processor 201 is coupled to a chroma decimator 203 which is fed the chroma samples from the image sample processor 201. The chroma decimator 203 is arranged to decimate the chroma samples of the YUV444 signal such that the chroma samples are subsampled relative to the luma values and fewer samples representing the image.

However, in contrast to YUV422 and YUV420, the subsampling is not merely performed by uniformly selecting a subset of the luma sample points across the image but rather it generates a chroma sample pattern that varies for different positions in the image. The chroma sample pattern is a chroma subsample pattern (relative to the luma sample pattern).

In particular, the decimation is such that the chroma sample pattern has at least one of a varying subsampling ratio and a varying subsampling phase. The varying subsampling phase may reflect the chroma sampling pattern having a sampling offset relative to a subsampled grid which corresponds to the regular grid when subsampled corresponding to the subsampling of the chroma samples.

The decimation may in principle be by any suitable factor but will in many embodiments advantageously be an integer value, and may be a predetermined and fixed value. In many embodiments, the decimation factor is typically by a factor of two or four.

In order to avoid aliasing, the chroma decimator 203 first applies an anti-alias filter to the chroma samples from the image sample processor 201. The anti-alias filter is specifically a low pass filter with a cut-off frequency below the spatial Nyquist frequency of the decimated sample pattern. Following the anti-alias filtering, the decimation is performed by evaluating the anti-alias filter output values at the sample positions of the chroma sample pattern.

The apparatus of FIG. 2 further comprises an encoder which is coupled to the image sample processor 201 and the chroma decimator 203 and which receives the set of luma samples from the image sample processor 201 and the sets of decimated chroma values from the chroma decimator 203. The encoder then proceeds to encode the image by encoding the luma and chroma samples.

It will be appreciated that many different image encoding algorithms are known to the person skilled in the art and that any suitable algorithm may be used without subtracting from the invention.

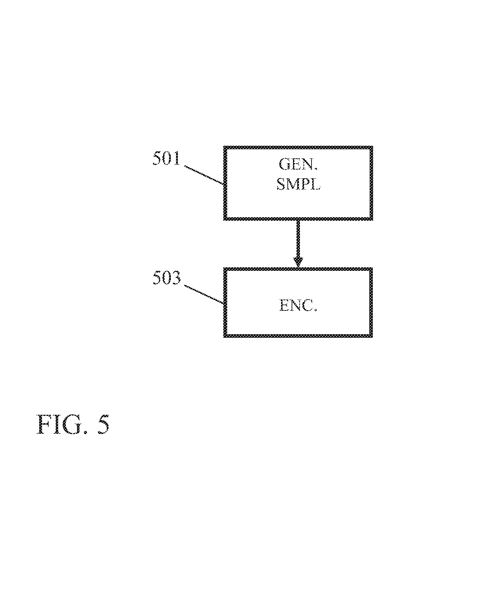

The method of operation of the system of FIG. 2 is illustrated by the example of FIG. 5. In step 501, the system generates a representation of the image where the representation comprises a set of luma samples and at least a first set of chroma samples. The chroma samples are subsampled relative to the luma samples. The sample pattern for the luma samples corresponds to a regular grid of sample positions. The sample pattern for at least one of the set of chroma samples has either a varying subsampling ratio or a varying subsampling phase (or both).

In some embodiments, the generated representation thus does not have uniform chroma sample pattern but has a chroma sample pattern which varies as a function of position and which specifically has a non-constant sample density. Alternatively or additionally, the chroma sample pattern has a varying subsampling phase, and specifically with a spatial offset between the chroma sample positions and the subsampled regular luma grid not being constant but rather being different for at least two sample positions. Thus, a variation exists in the spatial relationship between the characteristics of the chroma sample pattern and the subsampled luma sample pattern.

Step 501 is followed by step 503 wherein the image is encoded by an encoding of the luma and chroma samples in accordance with any suitable encoding algorithm.

In the following, examples will be given to illustrate the varying subsampling phase. However, it will be appreciated that the approach and principles are not limited to these examples but can be applied to many other representations and in particular to many other subsampling strategies.

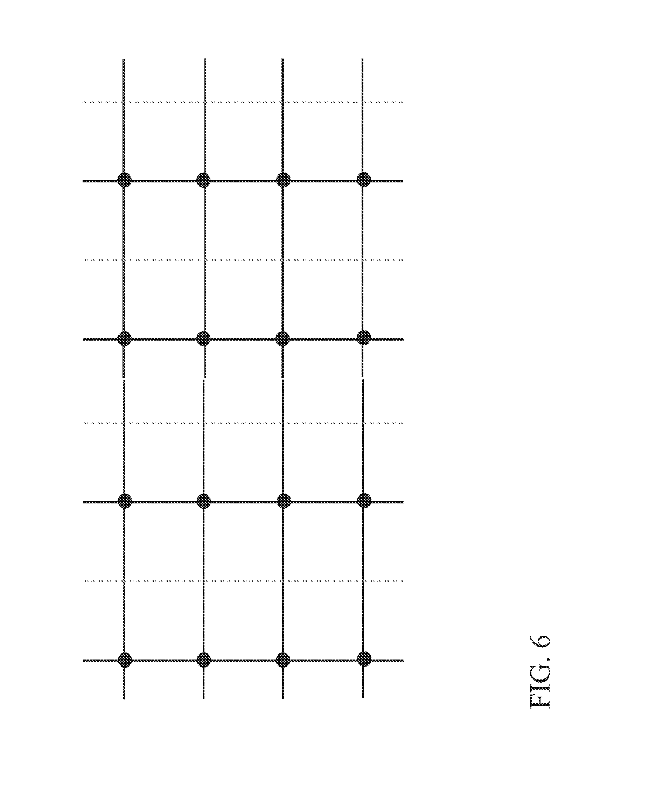

In conventional system, the YUV444 example of FIG. 3 may be subsampled to a YUV422 system (as indicated in FIG. 1). The YUV422 subsampling corresponds to a horizontal subsampling by a factor of two and with no subsampling in the vertical direction. (It will be appreciated that the terms horizontal and vertical are used to denote the two axes/directions of the regular grid of the luma sample pattern and does not imply any absolute orientation, i.e. the terms could be replaced by more abstract terms such as a first and second direction of the regular grid of the luma sample pattern). Thus, the effect of the decimation which translates from YUV444 to YUV422 is effectively to remove every other vertical line of the regular grid. In other words, the YUV422 chroma sample pattern corresponds to the luma sample pattern with every alternative vertical line being removed. Thus, as illustrated in FIG. 6 (wherein deleted lines of the luma grid are shown by dashed lines), the sample positions of the chroma pattern are aligned with a subsampled grid of the luma sample grid and the chroma pattern has a constant subsampling phase. A uniform and constant sampling of the image relative to this subsampled grid is thus performed.

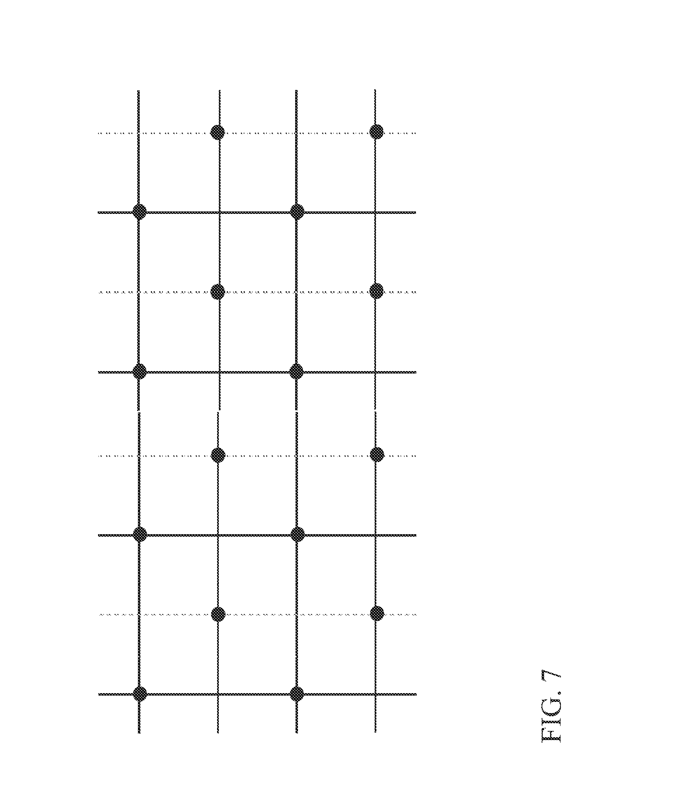

FIG. 7 illustrates a specific example of how a representation may be generated in the system of FIG. 2. As illustrated in FIG. 7, the specific example also includes a subsampling of the chroma samples (for each chroma component) by a factor of two in the horizontal direction. Thus, similarly to FIG. 6, a subsampled grid of the luma sampling grid is given by subsampling the vertical grid lines by a factor of two. Thus every other vertical line is removed. However, in contrast to the example of FIG. 6, the chroma samples are not merely located according to the resulting subsampled grid but have a varying subsampling phase. Indeed every other horizontal line is offset such that the chroma sample positions are midway between the vertical grid lines of the subsampled grid. Thus, in the example of FIG. 7, some samples (namely those of every other horizontal line) are positioned with no offset relative to the subsampled grid whereas other samples (namely those of the other horizontal lines) have a non-zero offset relative to the subsampled grid.

The non-zero offset is in the specific example equivalent to half a distance between two vertical lines of the subsampled grid (i.e. corresponding to a distance between two vertical lines in the full resolution luma sample grid). This approach results in a quincunx sampling pattern which is particularly advantageous. However, other non-zero offsets, and thus other sampling patterns, may of course be used in other embodiments.

In the previous example, a chroma subsampling by a factor of two in the horizontal direction was used. However, many other subsamplings may of course be used and the subsampling may specifically be in the horizontal direction, in the vertical direction, or in both the horizontal and vertical direction.

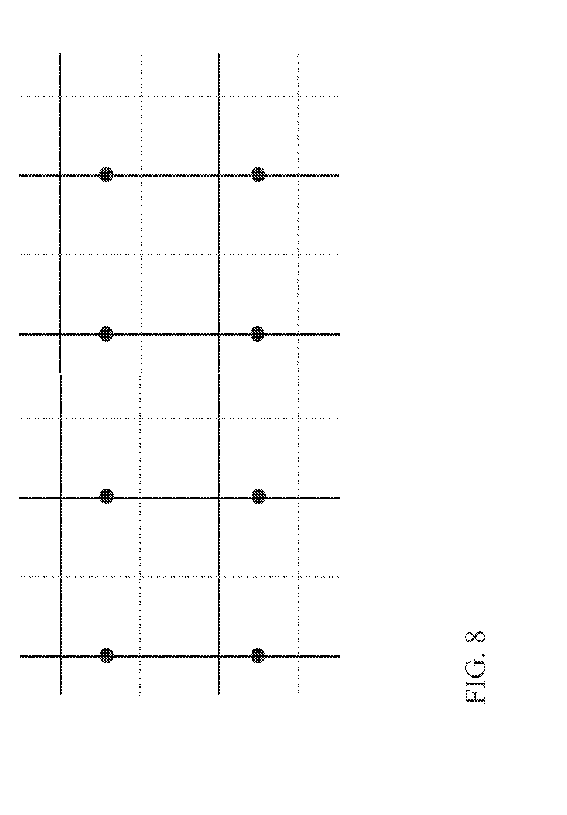

For example, in a conventional YUV444 to YUV420 conversion, the chroma components U and V are subsampled by a factor of two in both the horizontal and vertical direction, and furthermore the chroma samples are offset to midway between luma samples. Thus, in this example a subsample grid may be derived from the original luma grid by subsampling this in both the horizontal and vertical direction, i.e. by discarding both every other vertical and horizontal grid line. An example of this is illustrated in FIG. 8.

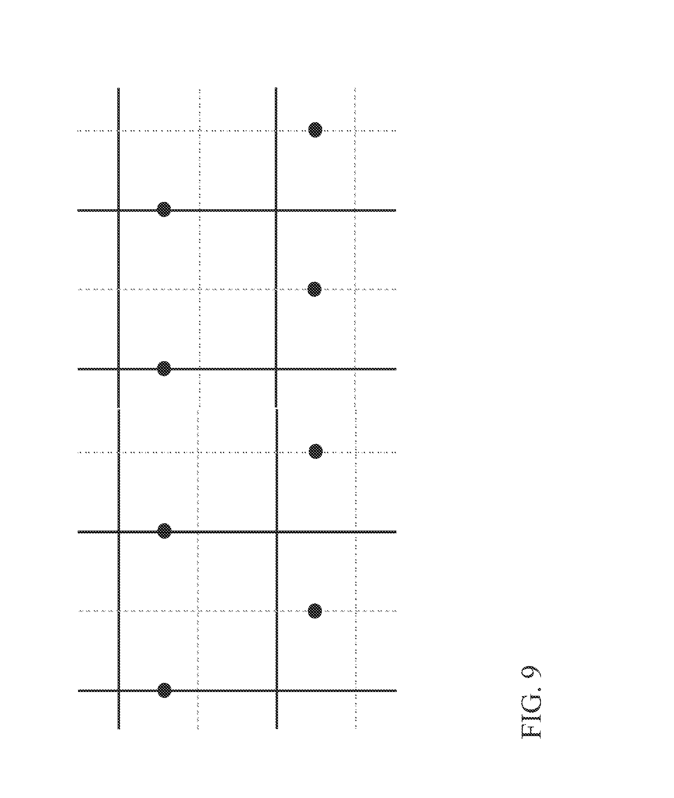

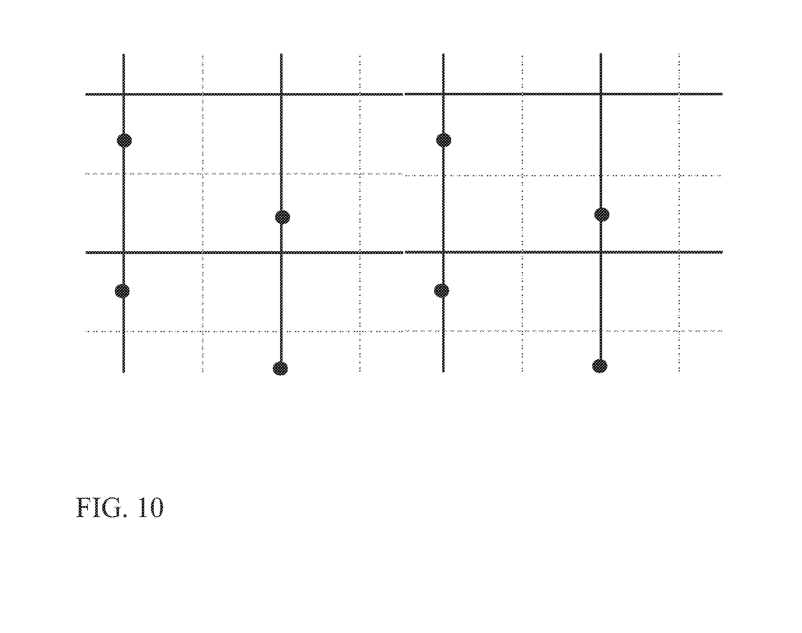

However, in the system of FIG. 2, such an approach would be modified e.g. by offsetting every other of the chroma sample lines in either the horizontal or vertical direction. FIG. 9 illustrates the result of offsetting every other horizontal line in the horizontal direction by an offset value corresponding to half the distance between the vertical grid lines of the subsampled grid. FIG. 10 illustrates the result of offsetting every other vertical line in the vertical direction by an offset value corresponding to half the distance between the vertical lines of the subsampled grid. As can be seen in FIGs. 9 and 10, the chroma sample positions accordingly have different relative offsets to the subsampled grid. Indeed in FIG. 9, the horizontal offset relative to the vertical lines of the subsampled grid is different for alternating horizontal sample lines and for FIG. 10 the vertical offset relative to the horizontal lines of the subsampled grid is different for alternating vertical lines.

It is also noted that the approaches of both FIG. 9 and FIG. 10 result in a quincunx chroma sampling with the therewith associated advantages.

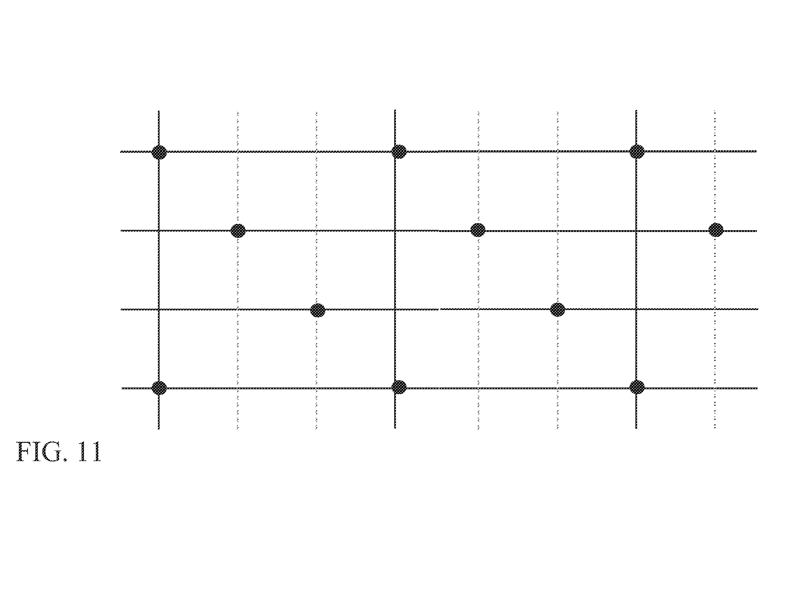

It will be appreciated that other subsampling factors are of course possible. For example, FIG. 11 illustrates an example wherein a horizontal decimation with a factor of three is applied and with the resulting sample lines being offset in the horizontal direction.

In the examples of FIGs. 7, 9, 10 and 11 the chroma sample patterns thus comprise a series of lines of sample positions which are parallel to the gridlines of the luma sample grid. Adjacent sample lines have different offsets relative to the subsampled grid. The lines are in the specific examples aligned with the directions of the gridlines of the regular and subsampled grid, and may specifically be horizontal and vertical lines.

Thus, in some embodiments the chroma sample pattern comprises sample lines that are aligned with the directions/grid lines of the luma sample pattern/regular grid thereof. The chroma sample pattern may comprise a subsampling in at least one direction of the directions of the regular grid. Specifically, the chroma samples may be subsampled relative to the luma samples by a horizontal subsampling ratio and/or a vertical subsampling ratio. One of these ratios may be one but at least one of them is larger than one. The ratios are typically integers.

A subsampled grid is given as the regular grid but subsampled in the same way as the chroma values are subsampled relative to the luma samples. Specifically, for a subsampling by an integer N (>1) in a given direction (e.g. horizontal and/or vertical), only every N'th gridline in the orthogonal direction is maintained. The positions of at least two of the chroma samples are such that they have a different offset to the subsampled grid. It is noted that this characteristics is independent of a shifting of the subsampled grid to coincide with other gridlines of the full resolution luma grid.

Thus, the spatial offset between a chroma sample position and its nearest subsampled grid intersection is different for at least two of the chroma samples (e.g. the spatial offset may be zero for some chroma samples and may be non-zero for other chroma samples or may e.g. have the same absolute value but be offset in different spatial directions).

In the specific examples, sample positions of at least one sample line are offset differently to sample positions of another sample line with reference to the subsampled grid.

The gridlines of the subsampled grid may specifically have equidistantly spaced gridlines, typically in both directions. The chroma sample pattern may be uniform across the entire image.

It will also be noted that whereas the chroma sample positions in the specific examples are collocated with luma sample positions, this may not necessarily be the case in all embodiments.

The described approach may provide a number of advantages and may in particular allow an improved image quality. For example, the approach may e.g. allow more information to be present from either side of a sharp color transient and thus may allow an improvement in interpolative reconstruction at the decoding end. Furthermore, the approach, and in particular quincunx sampling, may allow for a more evenly spread information which may assist substantially in any upscaling of the chroma values at the decoder side to generate the original full scale chroma samples. Indeed, the approach may in particular allow for a more uniform and isotropic filtering to be used in the upscaling.

Indeed, the approach has been found to very efficiently compensate or mitigate degradations introduced when subsampling the chroma values. Indeed, it has been found that modifying a YUV422 sampling pattern to provide a quincunx sampling pattern such as that of FIG. 7 , a quality closely resembling that of the corresponding YUV444 image can be achieved. Thus, almost the same performance as the full resolution chroma sampled image can be achieved while halving the number of samples to encode per chroma component.

Furthermore, the approach provides improved backwards compatibility and the inventors have realized that the modified sampling can be performed such that existing functionality and e.g. dedicated hardware can be used for the encoding.

For example, the modified sampling approach of FIG. 7 comprises the same number of samples as an YUV422 sampling. Thus, denoting the modified sampling approach as YUV422QC, it can be noted that the resulting YUV422 and YUV422QC sample data has very similar characteristics. E.g. they specifically contain the same number of samples and this allows the YUV422QC to be represented in an YUV422 data container.

In some embodiments the YUV422QC data may be encoded as if it was YUV422 data. Indeed, by reformatting the YUV422QC data to fit a YUV422 data container, this data container can be fed to any compression encoder capable of handling a YUV422 signal, such as e.g. an H264/AVC encoder.

Thus, in the example, the subsampling ratio between the luma samples and chroma samples has a predetermined integer value which corresponds to a value of an existing color scheme. Specifically the integer value may advantageously be 2 (as in YUV422 wherein a horizontal decimation factor of two is used) or may advantageously be 4 (as in YUV420 wherein a horizontal decimation factor of two and a vertical decimation factor of two are used).

This allows the resulting samples to be included in a data container specified for the existing color scheme for which there is no variation in the spatial offset of the chroma samples relative to the subsampled grid. This data container may then be encoded by an encoder that applies an encoding algorithm for a chroma sample pattern that has a non-varying spatial offset relative to the subsampled grid. Specifically, YUV422QC may be encoded by a YUV422 encoder or YUV420QC (as e.g. of FIGs. 9 or 10) may be encoded by an YUV420 encoder. As will be described later, the varying offsets may be taken into account when decoding the signal thereby allowing efficient performance.

Thus, the approach may provide improved quality while at the same time allowing existing functionality to be reused. Specifically, YUV422QC/ YUV420QC may be encoded by YUV422/ YUV420 dedicated hardware or existing algorithms. Thus, the modified color scheme/ sampling patterns can be mapped onto existing YUV422 silicon while at the same time providing performance approaching that of YUV444 color resolution. Thus, improved performance while maintaining low cost and low complexity can be achieved.

In some embodiments, a non-uniform distribution of sample positions may be applied and the subsampling ratio may vary between different areas of the image. Thus, in some areas, a very dense sampling may be performed whereas in other areas the sampling density may be significantly less.

In some embodiments, the chroma sample positions may be selected to coincide with the luma sample positions but it will be appreciated that this is not necessary.

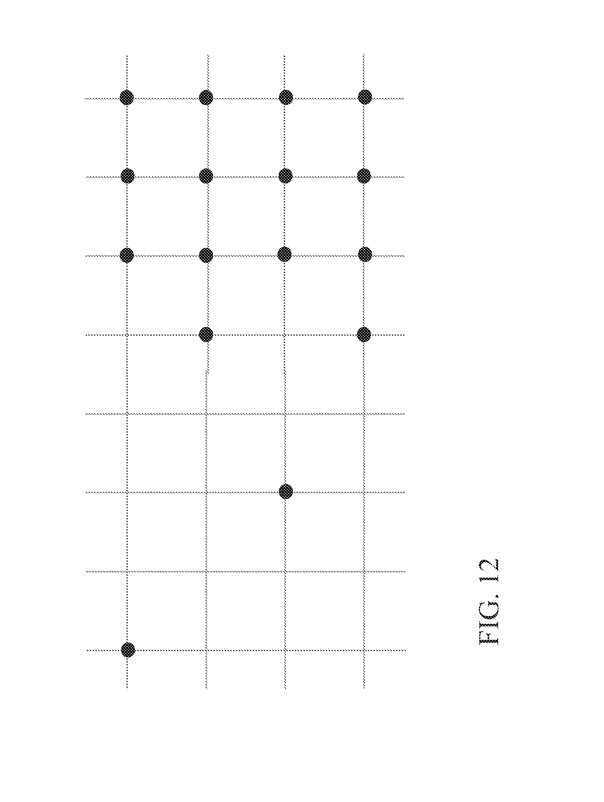

FIG. 12 illustrates an example where the chroma sample positions coincide with the luma samples and with the intersections of the grid lines of the regular luma sample grid. However, the density of sample points varies significantly. In the example, a chroma subsampling of two is used for the illustrated region. However, the sampling density varies significantly with the left area having a very low sampling density and the high area having a very high sampling density. Thus, a more accurate sampling of chroma is provided for the right hand side at the expense of the left hand side.

Such an approach may in many scenarios provide an improved adaptation of the sampling to the image characteristics. For example, in the example of FIG. 11, the left side may correspond to a smooth image object having only very low frequency chroma variations, whereas the chroma variation frequency may be relatively high on the right side. Thus, the sampling may allow improved sampling of the high frequency chroma variations.

In some embodiments or scenarios, the non-uniform sample distribution may be static, such as for example if the image characteristics (and specifically variation characteristics of chroma) are known or can be assumed. However, in many embodiments, the subsampling ratio variation is advantageously determined in response to the image characteristics. Indeed, local subsample ratios or sample densities may be determined in response to image characteristics of the image.

For example, the image may be evaluated and a local variation measure may be determined. The variation measure may for example be a luma variation measure for the set of luma samples and/or may e.g. be a chroma variation measure determined on the basis of the non-decimated chroma samples. Specifically, the luma and/or chroma samples of the non-decimated YUV444 signal may be evaluated and the subsampling ratio in different areas of the image may be selected based on this evaluation.

As an example, the local variation measure for a given position may be determined as the variance of (chroma or luma) sample values within a predetermined distance of the current position (say, less than 10 or 20 sample positions away for the YUV444 sample pattern).

An advantage of adapting the subsampling ratio in response to luma sample values is that these are encoded in the encoded data stream and thus are available at the decoder. Thus, the decoder can use the same algorithm based on luma samples to determine the chroma sample pattern and apply this pattern when recreating the image. However, the full resolution chroma samples are not available at the decoder and therefore the encoder may include additional data indicating the resulting chroma pattern when this is determined on the basis of chroma samples.

As another example, the image may be segmented into a number of image segments. It will be appreciated that the skilled person will be aware of many different image segmentation algorithms and that any such suitable algorithm may be used. The chroma and/or luma variation within each segment may then be determined and the subsampling ratio may for each segment be selected in response to the variation in the segment.

In some embodiments, the selection of the local sampling ratio, and thus the difference between adjacent sample positions, may simply be determined from a predetermined relationship between the variation measure and the subsampling ratio. For example, during the design phase, a look-up table may be generated which provides a subsample ratio/ decimation factor/ inter-sample distance for each given value of the variation measure. Such an approach may allow the total number of samples for the image to vary dependent on the characteristics of the image.

However, in other scenarios the determination of the non-uniform sampling pattern may be subject to various constraints and may specifically be subject to a requirement that the total number of samples for a given region/area or the whole image has a specific value. For example, it may be required that the average subsampling ratio for the entire image has a value of, say, two.

This may e.g. be achieved by determining the total number of chroma samples resulting from applying the subsampling ratios determined by the table look up. The resulting subsampling ratios may then be scaled (up or down) to modify the resulting total number of samples to the desired value. The process may be iterated until the desired number of samples is obtained.

An advantage of constraining the sample selection to meet a predetermined requirement is that it may e.g. be used to allow the resulting chroma representation of the image to fit into e.g. a YUV422 container thereby allowing reuse of functionality.

In some embodiments, a scalable encoding approach may be used. For example, a base layer may be generated which contains the luma samples and further comprises at least one set of chroma samples. A second set of chroma samples may then be provided in an enhancement layer, i.e. the second set of chroma samples may be optional chroma samples.

The first set of chroma samples may be subsampled relative to the second set of chroma samples. Furthermore, the second set of samples may be generated with a sample pattern with at least one of a varying subsampling ratio and a varying sample offset relative to the subsampled luma grid. In contrast, the first sample set, i.e. the base layer chroma sample set, may be sampled in accordance with a conventional uniform and non-offset sample pattern.

As a specific example, the base layer may comprise a YUV420 representation which allows conventional decoders to decode the base layer color image. In addition, the enhancement layer may include the chroma values for the corresponding YUV422QC representation thereby allowing all suitably equipped encoders to provide enhanced quality for the decoded image.

In some embodiments, the chroma representation of the enhancement layer may be encoded relative to the chroma representation of the base layer. Specifically, a prediction of the enhanced stream chroma samples is generated from the base layer chroma samples and the enhanced stream chroma samples are then coded as differential values relative to the predicted signal.

In the specific example, the YUV420 may be upscaled to a YUV422QC representation, e.g. by generating additional chroma samples by interpolation of existing chroma samples. The upscaled chroma samples may then be subtracted from the original YUV422QC samples and the difference may be encoded.

In some embodiments, the generated output stream from the encoder may furthermore comprise an indication of the used color scheme representation. In particular, whenever the YUV422QC color representation is used, an indication thereof may be included in the output stream.

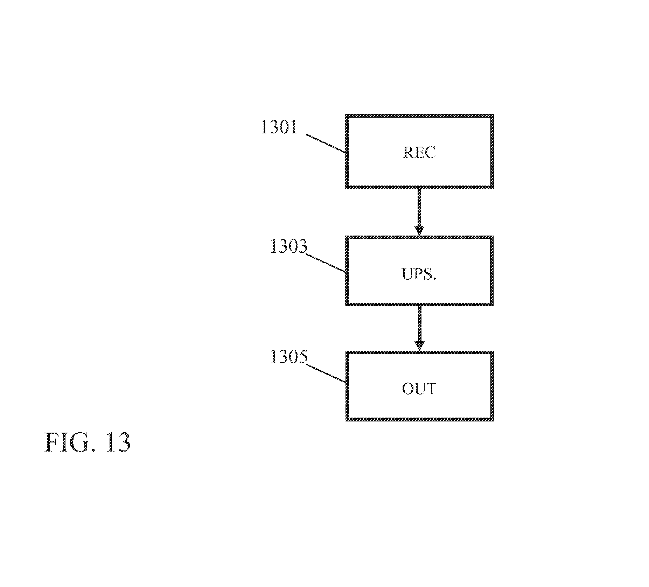

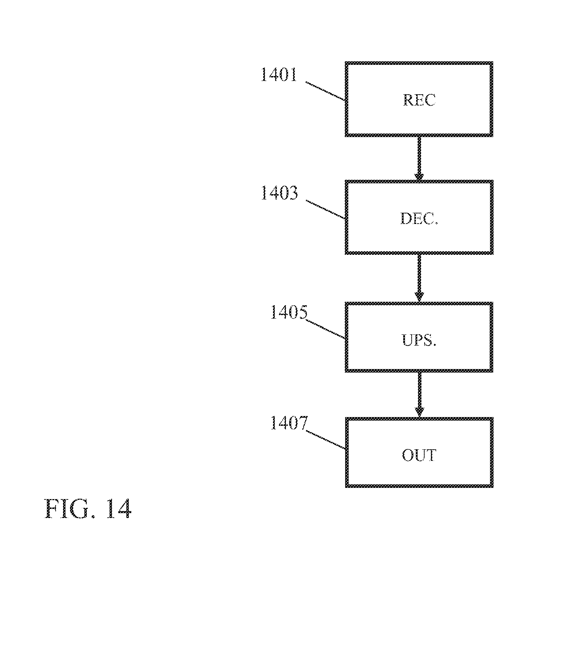

FIG. 13 illustrates an example of a method for generating an image from image data which is in accordance with the color schemes previously described. The method may specifically be performed by a decoder and will be described with reference to the exemplary encoder illustrated in FIG. 14.

The method starts in step 1301 wherein a receiver 1401 of the decoder of FIG. 14 receives a data signal for the image. The data signal comprises sample data for the image to be generated. In the specific example, the image data is provided in encoded form and the step accordingly comprises decoding the received data. In the example, this is performed in the decoding unit 1403 of FIG. 13 which is coupled to the receiver 1401.

The decoder may be any suitable encoder and may specifically be a complementary decoder to that used by the encoder of FIG. 2. Indeed, the data signal received by the decoder of FIG. 14 may be one generated by the encoder of FIG. 2.

Thus, as previously described, the image is represented by a set of luma samples and at least a first set of chroma samples being subsampled relative to the luma samples. The luma samples have a luma sample pattern corresponding to a regular grid of sample positions. The first set of chroma samples has a chroma sample pattern which either has a varying subsampling ratio or a varying sampling offset relative to the subsampled grid (or both).

The received and decoded luma and chroma samples are then fed to an upscale processor 1405 which proceeds to perform step 1403 wherein the chroma samples are upscaled. The upscale processor 1405 generates a new set of chroma samples which has the same resolution and positions as the luma samples. Thus, an upscaling of chroma samples is performed.

The decoder further comprises an output processor 1407 which performs step 1305 which generates the image from the luma samples and the chroma samples. The output processor 1407 may simply structure the samples such that a luma value and a chroma value for each chroma component are provided for each luma sample position. Thus, the output image is represented by coincident and full resolution luma and chroma values. Specifically, a YUV444 image may be outputted.

The upscaling of step 1303 may for example generate chroma sample values at the luma sample positions for which no chroma sample is provided by interpolating between provided chroma samples.

In some embodiments the upscaling may be performed by padding the received chroma samples by zeroes followed by a filtering of the resulting zero padded chroma image.

For example, for the quincunx pattern of FIG. 7, a zero sample value may in inserted at every luma sample position (i.e. at any grid intersection of the luma regular grid). E.g. a pattern such as:

```
u 0 u 0 u 0 u
0 u 0 u 0 u 0
u 0 u 0 u 0 u
0 u 0 u 0 u 0
```

may be generated.

The resulting sample pattern may then be spatially filtered by a two-dimensional filter. The filtering may for example correspond to the anti-alias filter used in the encoder.

A specific example of a suitable filter may e.g. be:

$$h1 = [ \; 0 \quad -1 \quad -2 \quad -1 \quad 0 \; ;$$
$$-1 \quad -8 \quad 18 \quad -8 \quad -1 \; ;$$
$$-2 \quad 18 \quad 104 \quad 18 \; -2 \; ;$$
$$-1 \quad -8 \quad 18 \quad -8 \quad -1 \; ;$$
$$0 \quad -1 \quad -2 \quad -1 \quad 0 \; ]$$

The filter may e.g. only be applied at the luma sample positions for which no chroma sample exist or may be applied to all sample positions.

In some embodiments the generation of the new chroma samples may comprise generating chroma samples at luma sample positions in response to luma samples. Thus, the upscaling may not only depend on spatial considerations and the chroma samples, but may also take the luma samples into account.

For example, when calculating the unknown chroma sample u5 in a pattern such as:

```
..   u2   ..
u4   u5   u6
..   u8   ..
```

with the corresponding luma values:

```
y1  y2  y3
y4  y5  y6
y7  y8  y9
```

the chroma value may be calculated as:

$$u_x = \frac{u2 + u4 + u6 + u8}{4} \cdot \frac{4y_5}{y_2 + y_4 + y_6 + y_8}$$

Thus, not only is the chroma value calculated as an average of the surrounding chroma values but it is also weighted by the luma characteristics. Thus, in the example, the chroma component is weighted by a function of the high frequency luma pattern. This allows the low resolution average chromatic component (u) to be estimated while allowing the actual spatial pattern to be fine-determined from the luma pattern.

Another example is to perform the following calculation:

$$w_i = \left(1 - |y_5 - y_i|\right)^P$$

$$u_x = \left. \sum_{i=2,4,6,8} w_i u_i \middle/ \sum_{i=2,4,6,8} w_i \right., \text{ for } y \ni [0,1)$$

where P is a design parameter which sets the interpolation smoothness. In this example, the weights of the contributions from the surrounding chroma samples are thus determined based on the expected similarity as judged from the luma structure.

In some embodiments, the upscaling for one chroma component may be in response to sample values for another chroma component. This may be particularly advantageous when the two chroma components have sample positions that are offset relative to each other.

For example, for an YUV representation the sample pattern for the U component and the V components may be offset relative to each other such as e.g.:

```
u . u . u . u .      . v . v . v . v
. u . u . u . u      v . v . v . v .
u . u . u . u .      . v . v . v . v
. u . u . u . u      v . v . v . v .
```

Thus, in such an example, the calculation of ux in the following scenario,

```
..  u2  ..     y1 y2 y3    v1 .. v3
u4  ux  u6     y4 y5 y6    .. v5 ..
..  u8  ..     y7 y8 y9    v7 .. v9
```

may e.g. be calculated as:

$$u_x = \frac{u2 + u4 + u6 + u8}{4} \cdot \frac{4y_5}{y_2 + y_4 + y_6 + y_8} \cdot \frac{4v_5}{v_2 + v_4 + v_6 + v_8}$$

Such an approach may provide improved performance in many scenarios and may indeed allow high frequency information across the two chroma components to be reflected in the individual upscaled chroma components. This may be particularly helpful for color transitions where luma does not change.

Thus, in some embodiments the image data samples may further comprise a second set of chroma samples and the generation of the further set of chroma samples comprises generating a chroma sample at a luma sample position in response to the second set of chroma samples.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

**Claims**

1. A method of encoding an image, the method comprising:

   representing (501) the image by image data samples comprising a set of luma samples and at least a first set of chroma samples being subsampled relative to the luma samples, the luma samples having a luma sample pattern corresponding to a regular grid of sample positions and the first set of chroma samples having a chroma sample pattern with at least one of a varying subsampling ratio and a varying subsample phase; and
   encoding (503) the image data samples.

2. The method of claim 1 wherein the chroma sample pattern comprises a series of lines of sample positions with at least two adjacent lines having sample positions spatially offset relative to each other in a direction of the lines.

3. The method of claim 1or 2 wherein the chroma sample pattern is a quincunx sample pattern.

4. The method of claim 1, 2 or 3 wherein a subsampling ratio between the set of luma samples and the first set of chroma samples has an integer value.

5. The method of claim 1 or 2 wherein the subsampling ratio varies between different areas of the image.

6. The method of claim 5 further comprising determining sample positions for the chroma sample pattern in response to the set of luma samples.

7. The method of claim 6 wherein determining sample positions comprises determining a distance between adjacent sample positions of the chroma sample pattern in response to at least one of a local luma variation measure and a local chroma variation measure.

8. The method of claim 1, 2 or 5 wherein the encoding comprises applying an encoding algorithm for a chroma sample pattern having a non-varying subsample phase.

9. The method of claim 8 wherein the chroma sample pattern having a non-varying subsample phase corresponds to a sample pattern for one of a YUV422 sample pattern and a YUV420 sample pattern.

10. The method of claim 1, 2 or 5 wherein the image data samples further comprise a second set of chroma samples having a further chroma sample pattern, the further chroma sample pattern being subsampled relative to the chroma sample pattern; and wherein the step of encoding the image data samples comprises generating a scalable output bit stream having encoding data for the luma samples and the second set of chroma samples in a base layer, and encoding data for the first set of chroma samples in an enhancement layer.

11. The method of claim 10 wherein encoding the image data samples further comprises:

   generating a prediction for the first set of chroma samples from the second set of chroma samples; and
   generating the encoding data for the first set of chroma samples in response to the prediction.

12. A method of generating an image, the method comprising:

   receiving (1401, 1403) image data samples for the image, the image data samples comprising a set of luma samples and at least a first set of chroma samples being subsampled relative to the luma samples, the luma samples having a luma sample pattern corresponding to a regular grid of sample positions, and the first set of chroma samples having a chroma sample pattern with at least one of a varying subsampling ratio and a varying subsample phase;
   generating (1405) a further set of chroma samples comprising chroma samples at sample positions of the luma samples in response to the first set of chroma samples; and
   generating (1407) the image from the set of luma samples and the further set of chroma samples.

13. The method of claim 12 wherein generating (1405) the further set of chroma samples comprises generating a chroma sample at a luma sample position in response to the first set of luma samples.

14. The method of claim 12 or 13 wherein the image data samples further comprises a second set of chroma samples and generating the further set of chroma samples comprises generating a chroma sample at a luma sample position in response to the second set of chroma samples.

15. A computer program product for executing the method of any of the claims 1 to 14.

16. An apparatus for encoding an image comprising:

   a processor (201, 203) for representing the image by image data samples comprising a set of luma samples and at least a first set of chroma samples being subsampled relative to the luma samples, the luma samples having a luma sample pattern corresponding to a regular grid of sample positions, and the first set of chroma samples having a chroma sample pattern with at least one of a varying subsampling ratio and a varying subsample phase; and

an encoder (205) for encoding the image data samples.

17. An apparatus for generating an image comprising:

a receiver (1301) for receiving image data samples for the image, the image data samples comprising a set of luma samples and at least a first set of chroma samples being subsampled relative to the luma samples, the luma samples having a luma sample pattern corresponding to a regular grid of sample positions, and the first set of chroma samples having a chroma sample pattern with at least one of a varying subsampling ratio and a varying subsample phase;

a processor (1303) for generating a further set of chroma samples comprising chroma samples at sample positions of the luma samples in response to the first set of chroma samples; and

a processor (1305) for generating the image from the set of luma samples and the further set of chroma samples.

**FIG. 1**

FIG. 2

FIG. 3

FIG. 4

| GEN. SMPL. | | ENC. |

FIG. 5

FIG. 6

FIG. 7

FIG. 8

FIG. 9

FIG. 10

FIG. 11

FIG. 12

1301 — REC

1303 — UPS.

1305 — OUT

FIG. 13

| REC | | DEC. | | UPS. | | OUT |
|-----|-|------|-|------|-|-----|

1401

1403

1405

1407

FIG. 14

Europäisches
Patentamt

European
Patent Office

Office européen
des brevets

# EUROPEAN SEARCH REPORT

Application Number

EP 10 19 1645

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/165078 A1 (ROUTHIER NICHOLAS [CA] ET AL) 1 July 2010 (2010-07-01) | 1-4,8,9, 12,13, 15-17 | INV. H04N7/26 |
| Y | * abstract * <br> * paragraph [0022] - paragraph [0023] * <br> * figures 3A, 3B * <br> ----- | 10,11,14 | |
| X | EP 1 406 447 A1 (ST MICROELECTRONICS SRL [IT]) 7 April 2004 (2004-04-07) <br><br> * paragraph [0093] - paragraph [0096] * <br> ----- | 1-4,8,9, 12,13, 15-17 | |
| X | SHUN-ICHI SEKIGUCHI ET AL: "On adaptive chroma sampling for 4:4:4 video coding", 82. MPEG MEETING; 22-10-2007 - 26-10-2007; SHENZHEN; (MOTION PICTURE EXPERT GROUP OR ISO/IEC JTC1/SC29/WG11),, 17 October 2007 (2007-10-17), XP030043522, * the whole document * <br> ----- | 1,4-9, 12,13, 15-17 | |
| X | US 6 486 981 B1 (SHIMURA NORIO [JP] ET AL) 26 November 2002 (2002-11-26) <br><br> * abstract * <br> * column 4, line 61 - column 6, line 33 * <br> ----- | 1,4-9, 12,13, 15-17 | TECHNICAL FIELDS SEARCHED (IPC) <br><br> H04N |
| Y | US 2005/259729 A1 (SUN SHIJUN [US]) 24 November 2005 (2005-11-24) * paragraph [0031] - paragraph [0033] * * figures 3-7 * <br> ----- | 10,11,14 | |
| A | WO 2008/049446 A1 (FRAUNHOFER GES FORSCHUNG [DE]; MARPE DETLEV [DE]; WINKEN MARTIN [DE];) 2 May 2008 (2008-05-02) * page 7, line 9 - line 14 * * page 18, line 30 - page 19, line 33 * <br> ----- | 10,11,14 | |

The present search report has been drawn up for all claims

| Place of search | Date of completion of the search | Examiner |
|---|---|---|
| Berlin | 5 May 2011 | Kontopodis, D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 10 19 1645

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2011

| Patent document cited in search report | | Publication date | Patent family member(s) | | Publication date |
|---|---|---|---|---|---|
| US 2010165078 | A1 | 01-07-2010 | WO 2010075624 | A1 | 08-07-2010 |
| EP 1406447 | A1 | 07-04-2004 | US 2004120594 | A1 | 24-06-2004 |
| US 6486981 | B1 | 26-11-2002 | NONE | | |
| US 2005259729 | A1 | 24-11-2005 | NONE | | |
| WO 2008049446 | A1 | 02-05-2008 | CN 101589625 A | | 25-11-2009 |
| | | | EP 2084913 A1 | | 05-08-2009 |
| | | | JP 2010507941 T | | 11-03-2010 |
| | | | US 2010020866 A1 | | 28-01-2010 |

For more details about this annex : see Official Journal of the European Patent Office, No. 12/82